(19) Europäisches Patentamt
European Patent Office
Office européen des brevets

(11) **EP 3 196 413 B1**

(12) **EUROPÄISCHE PATENTSCHRIFT**

(45) Veröffentlichungstag und Bekanntmachung des Hinweises auf die Patenterteilung:
**14.11.2018 Patentblatt 2018/46**

(51) Int Cl.:
*F01D 5/16* *(2006.01)* *F01D 5/26* *(2006.01)*
*F01D 25/26* *(2006.01)* *F01D 25/06* *(2006.01)*
*F01D 9/04* *(2006.01)*

(21) Anmeldenummer: **16151966.5**

(22) Anmeldetag: **19.01.2016**

(54) **TURBOMASCHINENSTUFE**

TURBOENGINE STAGE

ÉTAGE DE TURBOMACHINE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**26.07.2017 Patentblatt 2017/30**

(73) Patentinhaber: **MTU Aero Engines AG**
**80995 München (DE)**

(72) Erfinder:
• **Schlemmer, Markus**
**84048 Mainburg / Sandelzhausen (DE)**
• **Hartung, Andreas**
**81829 München (DE)**
• **Richter, Karl-Hermann**
**85229 Markt Indersdorf (DE)**
• **Hanrieder, Herbert**
**85411 Hohenkammer (DE)**

(56) Entgegenhaltungen:
EP-A1- 2 806 105 WO-A1-2012/095067
DE-A1-102009 010 185

**Beschreibung**

Die Arbeiten, die zu dieser Erfindung geführt haben, wurden gemäß der *Finanzhilfevereinbarung* Nr. CSJU-GAM-SAGE-2008-001 im Zuge des Siebten Rahmenprogramms der Europäischen Union (*FP7/2007-2013*) für Clean Sky Joint Technology Initiative gefördert.

Die vorliegende Erfindung betrifft eine Turbomaschinenstufe mit einem Leitgitter und einem benachbarten Laufgitter, eine Turbomaschine, insbesondere eine Gasturbine, mit der Turbomaschinenstufe sowie ein Verfahren zum Auslegen und/oder Herstellen der Turbomaschinenstufe.

Aus der eigenen WO 2012/095067 A1 ist es bekannt, an Leit- und Laufschaufeln einer Gasturbine Impulskörper anzuordnen, die zum Stoßkontakt mit der Schaufeln vorgesehen sind. In der EP 2 806 105 A werden auch Impulskörper an Leit- und Laufschaufeln angeordnet.

Hierdurch kann ein neuartiges Konzept der Anmelderin zur Reduzierung von unerwünschten Schwingungen realisiert werden, welches im Wesentlichen nicht auf Reibungsdissipation, sondern einer Verstimmung von Eigenformen und -frequenzen durch Stöße der Impulskörper basiert. Zu weiteren Details dieses Konzepts zur Verstimmung wird ergänzend auf die WO 2012/095067 A1 Bezug genommen.

Eine Aufgabe der vorliegenden Erfindung ist es, das Betriebs-, insbesondere Schwingungsverhalten einer Turbomaschine, insbesondere einer Gasturbine, zu verbessern.

Diese Aufgabe wird durch eine oder mehrere Turbomaschinenstufen mit den Merkmalen des Anspruchs 1 bzw. ein Verfahren mit den Merkmalen des Anspruchs 14 gelöst. Anspruch 13 stellt eine Turbomaschine, insbesondere eine Gasturbine, insbesondere eine Flugtriebwerk-Gasturbine, mit einer oder mehreren der hier beschriebenen Turbomaschinenstufen unter Schutz. Vorteilhafte Ausführungsformen der Erfindung sind Gegenstand der Unteransprüche.

Nach einer Ausführung der vorliegenden Erfindung weisen eine oder mehrere, insbesondere axial (bezogen auf eine (Haupt)Maschinenachse), beabstandete, Turbomaschinenstufen für eine, insbesondere einer, Turbomaschine, insbesondere Gasturbine, insbesondere Flugtriebwerk-Gasturbine, (jeweils), insbesondere genau bzw. nur, ein Leitgitter und, insbesondere genau bzw. nur, ein, insbesondere axial (bezogen auf eine bzw. die (Haupt)Maschinenachse), benachbartes Laufgitter auf.

Das Leitgitter der bzw. einer oder mehrere der Turbomaschinenstufe(n) für die bzw. der Turbomaschine ist in einer Ausführung (jeweils) bezüglich eines Gehäuses der Turbomaschine ortsfest und weist (jeweils) eine Anzahl von, insbesondere in Umfangsrichtung (bezogen auf eine bzw. die (Haupt)Maschinenachse) nebeneinander angeordneten, Leitschaufeln, insbesondere Leitschaufelblättern bzw. -profilen, zur Strömungsumlenkung und/oder Umsetzung von kinetischer in Druckenergie auf. In einer Ausführung sind die Leitschaufeln der bzw. einer oder mehrerer der Turbomaschinenstufe(n) für die bzw. der Turbomaschine gegenüber dem Gehäuse unbeweglich oder gegenüber dem Gehäuse zwar ortsfest, jedoch, insbesondere in ihrer Lage bzw. Orientierung, verstellbar.

Die Gesamt- bzw. Anzahl aller, insbesondere in Umfangsrichtung (bezogen auf eine bzw. die (Haupt)Maschinenachse) nebeneinander angeordneten, Leitschaufeln einer Turbomaschinenstufe wird vorliegend (jeweils) mit $S_v$ bezeichnet, wobei verschiedene Turbomaschinenstufen $u = 1, 2...$ in einer Ausführung verschiedene Leitschaufel(gesamt- bzw. -an)zahlen $s_{v(,u)}$ aufweisen. In einer Ausführung beträgt die Gesamt- bzw. Anzahl $s_{v(,u)}$ aller Leitschaufeln der bzw. einer oder mehrerer der Turbomaschinenstufe(n) für die bzw. der Turbomaschine (jeweils bzw. innerhalb der jeweiligen Turbomaschinenstufe) wenigstens 50, insbesondere wenigstens 100, insbesondere wenigstens 200.

In einer Ausführung sind die Leitschaufeln des Leitgitters der bzw. einer oder mehrerer der Turbomaschinenstufe(n) für die bzw. der Turbomaschine (jeweils) an insgesamt c Leitschaufelträgern dieses Leitgitters angeordnet, wobei c (jeweils) die Gesamt- bzw. Anzahl aller Leitschaufelträger der (entsprechenden) Turbomaschinenstufe bezeichnet und verschiedene Turbomaschinenstufen bzw. Leitgitter $u = 1, 2...$ in einer Ausführung verschiedene Leitschaufelträger(gesamt- bzw. -an)zahlen $c_{(u)}$ aufweisen.

Erfindungsgemäß sind an einem oder mehreren, insbesondere allen c, Leitschaufelträgern der bzw. einer oder mehrerer der Turbomaschinenstufe(n) für die bzw. der Turbomaschine (jeweils) wenigstens zwei, insbesondere wenigstens drei, insbesondere wenigstens vier und insbesondere wenigstens fünf der insgesamt $s_v$ Leitschaufeln des (jeweiligen) Leitgitters angeordnet, insbesondere zerstörungsfrei lösbar oder nicht-zerstörungsfrei-lösbar an dem jeweiligen Leitschaufelträger befestigt oder integral mit dem jeweiligen Leitschaufelträger ausgebildet. Entsprechend gilt in einer Ausführung für das Leitgitter der bzw. einer oder mehrerer der Turbomaschinenstufe(n) für die bzw. der Turbomaschine (jeweils) $s_v > c$, insbesondere $S_v \geq 2 \cdot c$, insbesondere $S_v \geq 3 \cdot c$, insbesondere $S_v \geq 4 \cdot c$ und insbesondere $S_v \geq 5 \cdot c$.

In einer Ausführung bilden die an einem (gemeinsamen) Leitschaufelträger angeordneten, insbesondere nicht-zerstörungsfrei-lösbar mit diesem verbundenen oder integral mit diesem hergestellten, Leitschaufeln, insbesondere Leitschaufelblätter bzw. -profile, zusammen mit dem Leitschaufelträger (jeweils) insbesondere einen sogenannten Leitschaufelcluster bzw. eine Leitschaufel(bau)gruppe. Zusätzlich oder alternativ kann der Leitschaufelträger (jeweils) ein radial inneres und/oder ein radial äußeres Deckband, insbesondere zur radialen Begrenzung eines Strömungskanals, bzw. einen Teil hiervon aufweisen bzw. bilden.

Das Laufgitter der bzw. einer oder mehrerer der Turbomaschinenstufe(n) für die bzw. der Turbomaschine ist in einer Ausführung (jeweils) bezüglich eines, insbesondere drehbar in dem Gehäuse der Turbomaschine angeordneten, Rotors der Turbomaschine ortsfest und weist (jeweils) eine Anzahl von, insbesondere in Umfangsrichtung (bezogen auf eine bzw. die (Haupt)Maschinenachse) nebeneinander angeordneten, Laufschaufeln zur Strömungsumlenkung und/oder Übertragung von kinetischer Energie in die oder von der Strömung auf.

In einer Ausführung sind die Laufschaufeln der bzw. einer oder mehrerer der Turbomaschinenstufe(n) für die bzw. der Turbomaschine (jeweils) zerstörungsfrei lösbar oder nicht-zerstörungsfrei-lösbar an dem ein- oder mehrteiligen Rotor, insbesondere einer Rotorscheibe, befestigt oder integral mit einer Rotorscheibe ausgebildet, insbesondere in Form einer sogenannten Blisk. Entsprechend können in einer Ausführung Laufschaufeln jeweils einzeln oder gruppenweise oder alle Laufschaufeln eines bzw. des Laufgitters integral miteinander hergestellt sein bzw. werden.

Die Gesamt- bzw. Anzahl aller, insbesondere in Umfangsrichtung (bezogen auf eine bzw. die (Haupt)Maschinenachse) nebeneinander angeordneten, Laufschaufeln einer Turbomaschinenstufe wird (jeweils) mit $s_b$ bezeichnet, wobei verschiedene Turbomaschinenstufen u = 1, 2... in einer Ausführung verschiedene Laufschaufel(gesamt- bzw. -an)zahlen $s_{b(,u)}$ aufweisen. In einer Ausführung beträgt die Gesamt- bzw. Anzahl $s_{b(,u)}$ aller Laufschaufeln der bzw. einer oder mehrerer der Turbomaschinenstufe(n) für die bzw. der Turbomaschine (jeweils bzw. innerhalb der jeweiligen Turbomaschinenstufe) wenigstens 50, insbesondere wenigstens 100, insbesondere wenigstens 200, und/oder höchstens $0{,}75 \cdot s_{v(,u)}$, insbesondere höchstens $0{,}5 \cdot s_{v(,u)}$.

Nach einer Ausführung der vorliegenden Erfindung weist das Leitgitter der bzw. einer oder mehrerer der Turbomaschinenstufe(n) für die bzw. der Turbomaschine (jeweils) Impulskörper auf, die in einer Hohlraumanordnung des (jeweiligen) Leitgitters, insbesondere einer Hohlraumanordnung in dem (jeweiligen) Leitgitter, mit Bewegungsspiel zum Stoßkontakt angeordnet sind.

Die Gesamt- bzw. Anzahl aller (an dem Leitgitter bzw. in dessen Hohlraumanordnung angeordneten) Impulskörper des Leitgitters einer Turbomaschinenstufe wird (jeweils) mit $n_v$ bezeichnet, wobei die Leitgitter verschiedener Turbomaschinenstufen u = 1, 2... in einer Ausführung verschiedene Impulskörper(gesamt- bzw. - an)zahlen $n_{v(,u)}$ aufweisen.

Nach einer Ausführung der vorliegenden Erfindung weist das Laufgitter der bzw. einer oder mehrerer der Turbomaschinenstufe(n) für die bzw. der Turbomaschine (jeweils) Impulskörper auf, die in einer Hohlraumanordnung des (jeweiligen) Laufgitters, insbesondere einer Hohlraumanordnung in dem (jeweiligen) Laufgitter, mit Bewegungsspiel zum Stoßkontakt angeordnet sind.

Die Gesamt- bzw. Anzahl aller (an dem Laufgitter bzw. in dessen Hohlraumanordnung angeordneten) Impulskörper des Laufgitters einer Turbomaschinenstufe wird (jeweils) mit $n_b$ bezeichnet, wobei die Laufgitter verschiedener Turbomaschinenstufen u = 1, 2... in einer Ausführung verschiedene Impulskörper(gesamt- bzw. - an)zahlen $n_{b(,u)}$ aufweisen.

In einer Ausführung sind die Impulskörper zum Stoßkontakt vorgesehen bzw. führen im Betrieb Stoßkontakte mit den Hohlraumanordnungen bzw. deren Wänden aus bzw. sind hierzu bzw. derart ausgebildet. Unter einem Stoßkontakt wird vorliegend insbesondere in fachüblicher Weise ein kurzzeitiger bzw. impulsartiger, insbesondere wenigstens im Wesentlichen vollständig elastischer, und/oder stochastischer bzw. regelloser Kontakt verstanden. Ergänzend wird hierzu auf die WO 2012/095067 A1 Bezug genommen.

Nach der vorliegenden Erfindung ist bzw. wird die Turbomaschinenstufe bzw. sind bzw. werden eine oder mehrere der Turbomaschinenstufen für die bzw. der Turbomaschine (jeweils) derart ausgebildet, insbesondere ausgelegt bzw. hergestellt, insbesondere Leit- und Laufgitter derart mit Impulskörpern bestückt, dass für die Turbomaschinenstufe (jeweils bzw. innerhalb der jeweiligen Turbomaschi-nenstufe) der Quotient $\dfrac{\sum\limits_{i=1}^{n_v} m_i}{s_v - c}$ der Summe $\sum\limits_{i=1}^{n_v} m_i$ der Massen aller (an dem Leitgitter bzw. in dessen Hohlraumanordnung angeordneten) Impulskörper des Leitgitters der Turbomaschinenstufe dividiert durch die Differenz ($s_v - c$) der Anzahl $s_v$ aller Leitschaufeln der Turbomaschinenstufe abzüglich der Anzahl c aller Leitschaufelträger der Turbomaschinenstufe wenigstens das 1,5fache, insbesondere wenigstens das 1,8fache und insbesondere wenigstens das 2fache bzw. Doppelte, des Quotienten $\dfrac{\sum\limits_{j=1}^{n_b} m_j}{s_b}$ der Summe $\sum\limits_{j=1}^{n_b} m_j$ der Massen aller (an dem Laufgitter bzw. in dessen Hohl-raumanordnung angeordneten) Impulskörper des Laufgitters der Turbomaschinenstufe dividiert durch die Anzahl $s_b$ aller Laufschaufeln der Turbomaschinenstufe beträgt.

Mit anderen Worten ist bzw. wird die Turbomaschinenstufe bzw. sind bzw. werden eine oder mehrere der Turbomaschinenstufen für die bzw. der Turbomaschine (jeweils) derart ausgelegt bzw. ausgebildet bzw. hergestellt, insbesondere Leit- und Laufgitter derart mit Impulskörpern bestückt, dass für die Turbomaschinenstufe (jeweils) gilt:

$$\frac{\sum_{i=1}^{n_v} m_i}{s_v - c} \geq 1,5 \cdot \frac{\sum_{j=1}^{n_b} m_j}{s_b},$$

insbesondere

$$\frac{\sum_{i=1}^{n_v} m_i}{s_v - c} \geq 1,8 \cdot \frac{\sum_{j=1}^{n_b} m_j}{s_b},$$

insbesondere

$$\frac{\sum_{i=1}^{n_v} m_i}{s_v - c} \geq 2 \cdot \frac{\sum_{j=1}^{n_b} m_j}{s_b}$$

mit den Massen $m_i$ der insgesamt $n_v$ Impulskörper des (jeweiligen) Leitgitters und den Massen $m_j$ der insgesamt $n_b$ Impulskörper des (jeweiligen) Laufgitters und $s_v > c$.

Es hat sich überraschend herausgestellt, dass eine solche Untergrenze für die somit insgesamt größere relative bzw. spezifische bzw. mittlere Impulskörpermasse des Leitgitters eine besonders vorteilhafte Verstimmung der (jeweiligen) Turbomaschinenstufe bewirkt. Es wird vermutet, dass dies wenigstens teilweise auf der fehlenden Fliehkraftwirkung im Leitgitter sowie dessen regelmäßig größerer Gesamtmasse, insbesondere Schaufelmasse, beruht.

In einer Ausführung ist bzw. wird das Laufgitter stromaufwärts des benachbarten Leitgitters angeordnet, das Leitgitter kann somit insbesondere ein sogenanntes Nachleitgitter des Laufgitters der Turbomaschinenstufe sein. In einer anderen Ausführung ist bzw. wird das Laufgitter stromabwärts des benachbarten Leitgitters angeordnet, das Leitgitter kann somit insbesondere ein sogenanntes Vorleitgitter des Laufgitters der Turbomaschinenstufe sein. In einer Ausführung ist die bzw. eine oder mehrere der Turbomaschinenstufe(n) für die bzw. der Turbomaschine (jeweils) eine Verdichter- oder Turbinenstufe.

Es hat sich überraschend herausgestellt, dass bei einer solchen Anwendung eine besonders vorteilhafte Reduzierung von Schaufel- und/oder Strukturschwingungen bewirkt werden kann.

In einer Ausführung sind bzw. werden einer oder mehrere der Impulskörper kugelförmig ausgebildet und/oder aus Metall oder aus $CrO_2$ hergestellt. Hierdurch kann ein vorteilhafter Stoßkontakt realisiert werden.

In einer Ausführung ist bzw. wird in einem oder mehreren Hohlräumen der Hohlraumanordnungen (jeweils) genau ein Impulskörper angeordnet. Hierdurch können vorteilhafte Einzelstoßkontakte realisiert werden. Rein theoretisch ist es auch denkbar, zusätzlich oder alternativ in einer Ausführung in einem oder mehreren Hohlräumen der Hohlraumanordnungen (jeweils) zwei oder mehr Impulskörper anzuordnen. Hierdurch können auch Stoßkontakte zwischen Impulskörpern realisiert werden.

In einer Ausführung sind bzw. werden einer oder mehrere der Impulskörper (jeweils) ungefesselt bzw. frei beweglich in einem Hohlraum der Hohlraumanordnungen angeordnet, der in einer Weiterbildung luftgefüllt sein bzw. werden kann. Hierdurch kann ein vorteilhafter Stoßkontakt realisiert werden.

In einer Ausführung sind bzw. werden ein oder mehrere Hohlräume der Hohlraumanordnungen (jeweils) in einem oder mehreren separat hergestellten Gehäusen angeordnet.

Dabei können in einer Weiterbildung ein oder mehrere Gehäuse (jeweils) ein oder mehrere, wenigstens teilweise mit Impulskörpern bestückte, Hohlräume aufweisen und/oder zerstörungsfrei lösbar oder nicht-zerstörungsfrei-lösbar an einer Leit- oder Laufschaufel oder einem Leitschaufelträger befestigt sein bzw. werden. In einer Weiterbildung können ein oder mehrere Gehäuse (jeweils) insbesondere an, insbesondere in, einem radial inneren oder radial äußeren Deckband des Leit- bzw. Laufgitters, insbesondere auf einer schaufelblattabgewandten Seite hiervon, angeordnet sein bzw. werden. Zusätzlich oder alternativ können in einer Weiterbildung ein oder mehrere, wenigstens teilweise mit Impulskörpern bestückte, Hohlräume eines oder mehrerer der Gehäuse (jeweils), insbesondere mittels eines, insbesondere gemeinsamen, Deckels, luftdicht (verschlossen) sein bzw. werden.

In einer Ausführung sind bzw. werden an einer oder mehreren Leitschaufel(blätter)n und/oder einem oder mehreren Leitschaufelträgern des Leitgitters der bzw. einer oder mehrerer der Turbomaschinenstufen für die bzw. der Turbomaschine (jeweils) genau ein Gehäuse und/oder an einer oder mehreren Leitschaufel(blätter)n und/oder einem oder mehreren Leitschaufelträgern des Leitgitters der bzw. einer oder mehrerer der Turbomaschinenstufen für die bzw. der Turbomaschine (jeweils) zwei oder mehr Gehäuse und/oder an einer oder mehreren Leitschaufel(blätter)n und/oder einem oder mehreren Leitschaufelträgern des Leitgitters der bzw. einer oder mehrerer der Turbomaschinenstufen für die bzw. der Turbomaschine (jeweils) kein solches Gehäuse angeordnet. Zusätzlich oder alternativ sind bzw. werden in einer Ausführung an einer oder mehreren Laufschaufeln des Laufgitters der bzw. einer oder mehrerer der Turbomaschinenstufen für die bzw. der Turbomaschine (jeweils) genau ein Gehäuse und/oder an einer oder mehreren Laufschaufeln des Laufgitters der bzw. einer oder mehrerer der Turbomaschinenstufen für die bzw. der Turbomaschine (jeweils) zwei oder mehr Gehäuse und/oder an einer oder mehreren Laufschaufeln des Laufgitters der bzw. einer oder mehrerer der Turbomaschinenstufen für die bzw. der Turbomaschine (jeweils) kein solches Gehäuse angeordnet. Hierdurch kann in einer Ausführung ein Leitgitter vorteilhaft mit den Impulskörpern bestückt werden.

In einer bevorzugten Ausführung sind bzw. werden (jeweils) einer oder mehrere der Impulskörper des Leitgitters bzw. mit diesen bestückte Hohlräume der Hohlraumanordnung des Leitgitters an, insbesondere in, einem radial inneren Deckband des Leitgitters, insbesondere einem radial inneren Deckband(teil) eines oder mehrerer seiner Leitschaufelträger, angeordnet bzw. weisen ein radial inneres Deckband(teil) eines oder mehrerer Leitschaufelträger (jeweils) einen oder mehrere der Impulskörper des Leitgitters bzw. mit diesen bestückte Hohlräume der Hohlraumanordnung des Leitgitters auf. Zusätzlich oder alternativ sind bzw. werden in einer Ausführung (jeweils) einer oder mehrere der Impulskörper des Leitgitters bzw. mit diesen bestückte Hohlräume der Hohlraumanordnung des Leitgitters an, insbesondere in, einem radial äußeren Deckband des Leitgitters, insbesondere einem radial äußeren Deckband(teil) eines oder mehrerer seiner Leitschaufelträger angeordnet bzw. weisen ein radial äußeres Deckband(teil) eines oder mehrerer Leitschaufelträger (jeweils) einen oder mehrere der Impulskörper des Leitgitters bzw. mit diesen bestückte Hohlräume der Hohlraumanordnung des Leitgitters auf. Zusätzlich oder alternativ sind bzw. werden in einer Ausführung (jeweils) einer oder mehrere der Impulskörper des Leitgitters bzw. mit diesen bestückte Hohlräume der Hohlraumanordnung des Leitgitters an, insbesondere in, einem oder mehreren Leitschaufel(blätter)n des Leitgitters angeordnet bzw. weisen eine oder mehrere Leitschaufeln eines oder mehrerer Leitschaufelträger (jeweils) einen oder mehrere der Impulskörper des Leitgitters bzw. mit diesen bestückte Hohlräume der Hohlraumanordnung des Leitgitters auf.

Zusätzlich oder alternativ sind bzw. werden in einer Ausführung (jeweils) einer oder mehrere der Impulskörper des Laufgitters bzw. mit diesen bestückte Hohlräume der Hohlraumanordnung des Laufgitters an, insbesondere in, einer oder mehreren Laufschaufeln des Laufgitters angeordnet bzw. weisen eine oder mehrere Laufschaufeln (jeweils) einen oder mehrere der Impulskörper des Laufgitters bzw. mit diesen bestückte Hohlräume der Hohlraumanordnung des Laufgitters auf. Insbesondere sind bzw. werden in einer Ausführung (jeweils) einer oder mehrere der Impulskörper des Laufgitters bzw. mit diesen bestückte Hohlräume der Hohlraumanordnung des Laufgitters an, insbesondere in, einem radial inneren Deckband des Laufgitters angeordnet. Zusätzlich oder alternativ sind bzw. werden in einer Ausführung einer oder mehrere der Impulskörper des Laufgitters bzw. mit diesen bestückte Hohlräume der Hohlraumanordnung des Laufgitters an, insbesondere in, einem radial äußeren Deckband des Laufgitters angeordnet. Zusätzlich oder alternativ sind bzw. werden in einer Ausführung einer oder mehrere der Impulskörper des Laufgitters bzw. mit diesen bestückte Hohlräume der Hohlraumanordnung des Laufgitters an, insbesondere in, einem oder mehreren Schaufelblättern des Laufgitters angeordnet.

Es hat sich überraschend herausgestellt, dass bei einer solchen Anordnung jeweils eine besonders vorteilhafte Reduzierung von Schaufel- und/oder Strukturschwingungen bewirkt werden kann.

In einer Ausführung weisen einer oder mehrere, insbesondere alle, Impulskörper des Leitgitters der bzw. einer oder mehrerer der Turbomaschinenstufen für die bzw. der Turbomaschine (jeweils) eine Masse auf, die wenigstens das 1,1fache der Masse des schwersten oder höchstens das 0,9fache der Masse des leichtesten der Impulskörper des Laufgitters dieser Turbomaschinenstufen und/oder wenigstens 0,01 Gramm (g), insbesondere wenigstens 0,02 g, und/oder höchstens 0,05 g, insbesondere höchstens 0,03 g, beträgt.

Zusätzlich oder alternativ weisen in einer Ausführung einer oder mehrere, insbesondere alle, Impulskörper des Leitgitters der bzw. einer oder mehrerer der Turbomaschinenstufen für die bzw. der Turbomaschine (jeweils) einen, insbesondere minimalen oder maximalen, Durchmesser auf, der wenigstens das 1,1fache eines maximalen Durchmessers des größten oder höchstens das 0,9fache eines minimalen Durchmessers des kleinsten der Impulskörper des Laufgitters dieser Turbomaschinenstufen und/oder wenigstens 1 mm und/oder höchstens 5 mm beträgt, insbesondere bei 20°C.

Zusätzlich oder alternativ beträgt in einer Ausführung das Bewegungsspiel eines oder mehrerer, insbesondere aller, Impulskörper des Leit- und/oder des Laufgitters der bzw. einer oder mehrerer der Turbomaschinenstufen für die bzw. der Turbomaschine (jeweils) wenigstens 0,01 mm, insbesondere wenigstens 0, 1 mm, und/oder wenigstens 1% eines minimalen Durchmessers dieses Impulskörpers und/oder höchstens 10 mm, insbesondere höchstens 1 mm, und/oder höchstens 100% eines maximalen Durchmessers dieses Impulskörpers, insbesondere bei 20°C.

Es hat sich überraschend herausgestellt, dass durch diese Parameter bzw. Grenzwerte jeweils bereits einzeln, insbesondere aber in Kombination von zwei oder mehr dieser Parameter bzw. Grenzwerte, eine besonders vorteilhafte Reduzierung von Schaufel- und/oder Strukturschwingungen bewirkt werden kann.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert, die einzige:

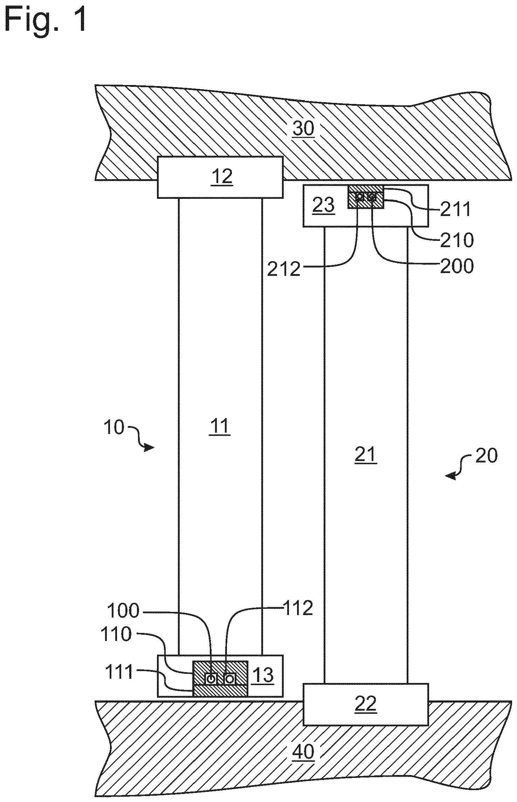

Fig. 1     eine Turbomaschinenstufe einer Turbomaschine nach einer Ausführung der vorliegenden Erfindung in einem meridialen Schnitt.

Fig. 1 zeigt eine Turbomaschinenstufe einer Turbomaschine nach einer Ausführung der vorliegenden Erfindung in einem meridialen Schnitt längs einer Hauptmaschinenachse der Turbomaschine (horizontal in Fig. 1).

Die Turbomaschinenstufe weist ein Leitgitter 10 mit mehreren in Umfangsrichtung (bezogen auf die Hauptmaschinenachse) nebeneinander angeordneten Leitschaufeln 11 auf.

Dabei sind jeweils vier der Leitschaufeln 11 integral miteinander ausgebildet und auf einem gemeinsamen Leitschaufelträger 12 angeordnet, der zugleich einen Teil eines radial äußeren Deckbandes des Leitgitters 10 bildet und an einem Gehäuse 30 der Turbomaschine befestigt ist.

Jeder dieser Leitschaufelcluster weist einen Teil eines radial inneren Deckbandes 13 des Leitgitters auf. Somit können natürlich auch dieser Teil des radial inneren Deckbandes 13 bzw. die beiden integral miteinander ausgebildeten Teile des radial inneren und äußeren Deckbandes gemeinsam als ein Leitschaufelträger im Sinne der vorliegenden Erfindung betrachtet werden, an dem die integral hiermit ausgebildeten Leitschaufeln 11 des Leitschaufelclusters angeordnet sind. Gleichermaßen können die Leitschaufeln 11 beispielsweise auch stoffschlüssig mit dem Leitschaufelträger 12 bzw. 13 verbunden sein.

An der schaufelblattabgewandten Seite (unten in Fig. 1) jedes dieser Leitschaufelcluster bzw. -träger bzw. Teile des radial inneren Deckbands 13 ist jeweils ein Gehäuse 110 befestigt.

Dieses weist im Ausführungsbeispiel jeweils sechs baugleiche oder unterschiedliche Hohlräume einer Hohlraumanordnung des Leitgitters auf, die durch einen gemeinsamen Deckel 111 luftdicht verschlossen und von denen im Schnitt der Fig. 1 zwei erkennbar sind. Diese Hohlräume und Hohlraumanordnung des Leitgitters sind einheitlich durch das Bezugszeichen 112 bezeichnet.

In jedem der Hohlräume 112 ist jeweils ein Impulskörper 100 mit Bewegungsspiel so aufgenommen, dass er im Betrieb der Turbomaschine Stöße mit den Wänden des Hohlraums ausführen kann.

In analoger Weise weist die Turbomaschinenstufe ein Laufgitter 20 mit mehreren in Umfangsrichtung (bezogen auf die Hauptmaschinenachse) nebeneinander angeordneten Laufschaufeln 21 auf.

Dabei ist jede der Laufschaufeln 21 mittels eines Schaufelfußes 22 an einem Rotor 40 der Turbomaschine angeordnet, wobei der Schaufelfuß 22 zugleich einen Teil eines radial inneren Deckbandes des Laufgitters aufweist bzw. bildet und jede der Laufschaufeln 22 einen Teil eines radial äußeren Deckbandes 23 des Laufgitters 20 aufweist bzw. bildet.

An der schaufelblattabgewandten Seite jedes dieser Teile des radial äußeren Deckbands 23 ist in analoger Weise jeweils ein Gehäuse 210 befestigt.

Dieses weist im Ausführungsbeispiel jeweils zwei baugleiche oder unterschiedliche Hohlräume einer Hohlraumanordnung des Laufgitters auf, die durch einen gemeinsamen Deckel 211 luftdicht verschlossen und die im Schnitt der Fig. 1 erkennbar sind. Diese Hohlräume und Hohlraumanordnung des Laufgitters sind einheitlich durch das Bezugszeichen 212 bezeichnet.

In jedem der Hohlräume 212 ist jeweils ein Impulskörper 200 mit Bewegungsspiel so aufgenommen, dass er im Betrieb der Turbomaschine Stöße mit den Wänden des Hohlraums ausführen kann.

In einer nicht dargestellten Abwandlung können zusätzlich oder alternativ Impulskörper 200 des Laufgitters 20 in Schaufelblättern und/oder dem radial inneren Deckband 22 angeordnet sein bzw. werden.

Die Turbomaschinenstufe ist bzw. wird so ausgebildet, insbesondere ausgelegt bzw. hergestellt, dass gilt:

$$\frac{\sum_{i=1}^{n_v} m_i}{s_v - c} \geq 2 \cdot \frac{\sum_{j=1}^{n_b} m_j}{s_b}$$

mit den Massen $m_i$ der insgesamt $n_v$ Impulskörper 100, den Massen $m_j$ der insgesamt $n_b$ Impulskörper 200, der Gesamt- bzw. Anzahl $s_v$ der Leitschaufeln 11 des Leitgitters 10, der Gesamt- bzw. Anzahl $s_b$ der Laufschaufeln 21 des Laufgitters 20 und der Gesamt- bzw. Anzahl $c$ der Leitschaufelträger 12 bzw. 13.

Im Ausführungsbeispiel weisen alle Impulskörper 100 jeweils eine Masse von etwa 0,025 g auf, das Leitgitter 10 exemplarisch 400 Leitschaufeln 11 ($s_v = 400$) und damit 100 Leitschaufelträger ($c = 100$), alle Impulskörper 200 jeweils eine Masse von etwa 0,010 g und das Laufgitter rein exemplarisch 200 Laufschaufeln 21 ($s_b = 200$), so dass gilt:

$$\frac{\displaystyle\sum_{i=1}^{6\cdot100} 0{,}025g}{\left(400-100\right)} = 0{,}05g > 2\cdot 0{,}02g = 2\cdot\frac{\displaystyle\sum_{i=1}^{2\cdot200} 0{,}010g}{200}$$

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

Bezugszeichenliste

| 10 | Leitgitter |
| 11 | Leitschaufel |
| 12 | radial äußeres (Leitgitter-/Leitschaufel)Deckband |
| 13 | radial inneres (Leitgitter-/Leitschaufel)Deckband |
| 20 | Laufgitter |
| 21 | Laufschaufel |
| 22 | radial inneres (Laufgitter-/Laufschaufel)Deckband |
| 23 | radial äußeres (Laufgitter-/Laufschaufel)Deckband |
| 30 | Gehäuse |
| 40 | Rotor |
| 100 | Impulskörper |
| 110 | Gehäuse |
| 111 | Deckel |
| 112 | Hohlraum(anordnung) |
| 200 | Impulskörper |
| 210 | Gehäuse |
| 211 | Deckel |
| 212 | Hohlraum(anordnung) |

**Patentansprüche**

1. Turbomaschinenstufe mit:

einem Leitgitter (10), dessen $s_v$ Leitschaufeln (11) an c Leitschaufelträgern (12, 13) angeordnet sind, wobei an wenigstens einem der Leitschaufelträger (12, 13) wenigstens zwei der Leitschaufeln (11) angeordnet sind; und einem benachbarten Laufgitter (20) mit $s_b$ Laufschaufeln (21); wobei das Leitgitter $n_v$ Impulskörper (100) aufweist, die in einer Hohlraumanordnung (112) des Leitgitters mit Bewegungsspiel zum Stoßkontakt angeordnet sind: **dadurch gekennzeichnet, dass** das Laufgitter $n_b$ Impulskörper (200) aufweist, die in einer Hohlraumanordnung (212) des Laufgitters mit Bewegungsspiel zum Stoßkontakt angeordnet sind; und

der Quotient $\dfrac{\displaystyle\sum_{i=1}^{n_v} m_i}{s_v - c}$ der Summe $\displaystyle\sum_{i=1}^{n_v} m_i$ der Massen aller Impulskörper des Leitgitters dividiert durch die

Differenz ($s_v$ - c) der Anzahl $s_v$ aller Leitschaufeln abzüglich der Anzahl c aller Leitschaufelträger wenigstens das 1,5fache des Quotienten $\dfrac{\sum\limits_{j=1}^{n_b} m_j}{s_b}$ der Summe $\sum\limits_{j=1}^{n_b} m_j$ der Massen aller Impulskörper des Laufgitters dividiert durch die Anzahl $s_b$ aller Laufschaufeln beträgt $\left( \dfrac{\sum\limits_{i=1}^{n_v} m_i}{s_v - c} \geq 1{,}5 \cdot \dfrac{\sum\limits_{j=1}^{n_b} m_j}{s_b} \right)$ .

2. Turbomaschinenstufe nach dem vorhergehenden Anspruch, **dadurch gekennzeichnet, dass** das Laufgitter (20) stromauf- oder abwärts des Leitgitters (10) angeordnet ist.

3. Turbomaschinenstufe nach einem der vorhergehenden Ansprüche, **dadurch gekennzeichnet, dass** die Turbomaschinenstufe eine Verdichter- oder Turbinenstufe, insbesondere einer Gasturbine, ist.

4. Turbomaschinenstufe nach einem der vorhergehenden Ansprüche, **dadurch gekennzeichnet, dass** an wenigstens einem der Leitschaufelträger (12, 13) wenigstens zwei der Leitschaufeln (11) zerstörungsfrei lösbar oder nicht-zerstörungsfrei-lösbar an dem Leitschaufelträger befestigt oder integral mit dem Leitschaufelträger ausgebildet sind.

5. Turbomaschinenstufe nach einem der vorhergehenden Ansprüche, **dadurch gekennzeichnet, dass** wenigstens einer der Impulskörper (100) des Leitgitters (10) und/oder wenigstens einer der Impulskörper (200) des Laufgitters (20) kugelförmig ausgebildet ist.

6. Turbomaschinenstufe nach einem der vorhergehenden Ansprüche, **dadurch gekennzeichnet, dass** in wenigstens einem Hohlraum (112) der Hohlraumanordnung des Leitgitters (10) genau einer oder wenigstens zwei der Impulskörper (100) des Leitgitters und/oder in wenigstens einem Hohlraum (221) der Hohlraumanordnung des Laufgitters (20) genau einer oder wenigstens zwei der Impulskörper (200) des Laufgitters angeordnet sind.

7. Turbomaschinenstufe nach einem der vorhergehenden Ansprüche, **dadurch gekennzeichnet, dass** wenigstens einer der Impulskörper (100) des Leitgitters (10) und/oder wenigstens einer der Impulskörper (200) des Laufgitters (20) ungefesselt in einem Hohlraum (112, 212) der Hohlraumanordnung angeordnet ist.

8. Turbomaschinenstufe nach einem der vorhergehenden Ansprüche, **dadurch gekennzeichnet, dass** wenigstens ein, insbesondere luftdichter, Hohlraum (112) der Hohlraumanordnung des Leitgitters (10) und/oder wenigstens ein, insbesondere luftdichter, Hohlraum (212) der Hohlraumanordnung des Laufgitters (20) in einem separat hergestellten Gehäuse (110, 210) angeordnet ist.

9. Turbomaschinenstufe nach einem der vorhergehenden Ansprüche, **dadurch gekennzeichnet, dass** wenigstens einer der Impulskörper (100) des Leitgitters (10) an, insbesondere in, einem radial inneren Deckband (13), wenigstens einer der Impulskörper des Leitgitters an, insbesondere in, einem Schaufelblatt und/oder wenigstens einer der Impulskörper des Leitgitters an, insbesondere in, einem radial äußeren Deckband (12) des Leitgitters (10) angeordnet ist und/oder wenigstens einer der Impulskörper (200) des Laufgitters (20) an, insbesondere in, einem radial inneren Deckband (22) des Laufgitters (20), wenigstens einer der Impulskörper (200) des Laufgitters (20) an, insbesondere in, einem Schaufelblatt und/oder wenigstens einer der Impulskörper (200) des Laufgitters (20) an, insbesondere in, einem radial äußeren Deckband (23) des Laufgitters (20) angeordnet ist.

10. Turbomaschinenstufe nach einem der vorhergehenden Ansprüche, **dadurch gekennzeichnet, dass** wenigstens einer der Impulskörper (100) des Leitgitters (10) eine Masse aufweist, die wenigstens das 1,1 fache der Masse des schwersten oder höchstens das 0,9fache der Masse des leichtesten der Impulskörper (200) des Laufgitters (20) und/oder wenigstens 0,01 g und/oder höchstens 0,05 g beträgt.

11. Turbomaschinenstufe nach einem der vorhergehenden Ansprüche, **dadurch gekennzeichnet, dass** wenigstens einer der Impulskörper (100) des Leitgitters (10) einen, insbesondere minimalen oder maximalen, Durchmesser aufweist, der wenigstens das 1,1 fache eines maximalen Durchmessers des größten oder höchstens das 0,9fache eines minimalen Durchmessers des kleinsten der Impulskörper (200) des Laufgitters (20) und/oder wenigstens 1 mm und/oder höchstens 5 mm beträgt.

12. Turbomaschinenstufe nach einem der vorhergehenden Ansprüche, **dadurch gekennzeichnet, dass** das Bewegungsspiel wenigstens eines der Impulskörper (100) des Leitgitters (10) und/oder das Bewegungsspiel wenigstens eines der Impulskörper (200) des Laufgitters (20) wenigstens 0,01 mm und/oder wenigstens 1% eines minimalen Durchmessers des Impulskörpers (100, 200) und/oder höchstens 10 mm und/oder höchstens 100% eines maximalen Durchmessers des Impulskörpers (100, 200) beträgt.

13. Turbomaschine, insbesondere Gasturbine, insbesondere Flugtriebwerk-Gasturbine, mit wenigstens einer Turbomaschinenstufe nach einem der vorhergehenden Ansprüche.

14. Verfahren zum Auslegen und/oder Herstellen einer Turbomaschinenstufe nach einem der vorhergehenden Ansprüche, wobei das Leitgitter (10) mit den $n_v$ Impulskörpern (100) und das Laufgitter (20) mit den $n_b$ Impulskörper (200) derart bestückt werden, dass der Quotient $\dfrac{\sum_{i=1}^{n_v} m_i}{s_v - c}$ der Summe $\sum_{i=1}^{n_v} m_i$ der Massen aller Impulskörper (100) des Leitgitters (10) dividiert durch die Differenz ($s_v$ - c) der Anzahl $s_v$ aller Leitschaufeln (11) abzüglich der Anzahl c aller Leitschaufelträger (12, 13) wenigstens das 1,5fache des Quotienten $\dfrac{\sum_{j=1}^{n_b} m_j}{s_b}$ der Summe $\sum_{j=1}^{n_b} m_j$ der Massen aller Impulskörper (200) des Laufgitters (20) dividiert durch die Anzahl $s_b$ aller Laufschaufeln (21) beträgt

$$\left( \frac{\sum_{i=1}^{n_v} m_i}{s_v - c} \geq 1{,}5 \cdot \frac{\sum_{j=1}^{n_b} m_j}{s_b} \right).$$

**Claims**

1. A turbo engine stage with
   a guide grid (10), of which the $s_v$ guide vanes (11) are arranged on c guide vane carriers (12, 13), wherein at least two guide vanes (11) are arranged on at least one guide vane carrier (12,13); and
   an adjacent rotor grid (20) with $s_b$ rotor blades (21);
   wherein the guide grid has $n_v$ impulse bodies (100), which are arranged in a cavity system (112) of the guide grid with movement play for an abutting contact; **characterized in that**
   the rotor grid has $n_b$ impulse bodies (200), which are arranged in a cavity system (212) of the rotor grid with movement play for abutting contact; and
   the quotient $\dfrac{\sum_{i=1}^{n_v} m_i}{s_v - c}$ of the sum $\sum_{i=1}^{n_v} m_i$ of the masses of all the impulse bodies of the guide grid divided by the difference ($S_v$ - c) of the number $s_v$ of all guide vanes and the number c of all guide vane carriers is at least 1.5 times the quotient $\dfrac{\sum_{j=1}^{n_b} m_j}{s_b}$ of the sum $\sum_{j=1}^{n_b} m_j$ of the masses of all the impulse bodies of the rotor grid divided by the number $s_b$ of all rotor blades $\left(\dfrac{\sum_{i=1}^{n_v} m_i}{s_v - c} \geq 1{,}5 \cdot \dfrac{\sum_{j=1}^{n_b} m_j}{s_b}\right.$ .

2. The turbo engine stage according to the preceding claim, **characterized in that** the rotor grid (20) is arranged upstream or downstream of the guide grid (10).

3. The turbo engine stage according to any one of the preceding claims, **characterized in that** the turbo engine stage is a compressor- or turbine stage, in particular of a gas turbine.

4. The turbo engine stage according to any one of the preceding claims, **characterized in that** on at least one of the guide vane carriers (12, 13), at least two guide vanes (11) are non-destructively detachably or destructively detachably fixed to the guide vane carrier or integrally built with the guide vane carrier.

5. The turbo engine stage according to any one of the preceding claims, **characterized in that** at least one of the impulse bodies (100) of the guide grid (10) and/or at least one of the impulse bodies (200) of the rotor grid (20) is formed in a spherical shape.

6. The turbo engine stage according to any one of the preceding claims, **characterized in that** in at least one cavity (112) of the cavity system of the guide grid (10), exactly one or at least two impulse bodies (100) of the guide grid, and/or in at least one cavity (221) of the cavity system of the rotor grid (20), exactly one or at least two impulse bodies (200) of the rotor grid are arranged.

7. The turbo engine stage according to any one of the preceding claims, **characterized in that** at least one of the impulse bodies (100) of the guide grid (10) and/or at least one of the impulse bodies (200) of the rotor grid (20) is freely arranged in a cavity (112, 212) of the cavity system.

8. The turbo engine stage according to any one of the preceding claims, **characterized in that** at least one, in particular airtight, cavity (112) of the cavity system of the guide grid (10) and/or at least one, in particular airtight, cavity (212) of the cavity system of the rotor grid (20) is arranged in a separately manufactured housing (110, 210).

9. The turbo engine stage according to any one of the preceding claims, **characterized in that** at least one of the impulse bodies (100) of the guide grid (10) is arranged on, in particular in, a radial inner cover band (13), at least one of the impulse bodies of the guide grid is arranged on, in particular in, an airfoil and/or at least one of the impulse bodies of the guide grid is arranged on, in particular in, a radial outer cover band (12) of the guide grid (10), and/or at least one of the impulse bodies (200) of the rotor grid (20) is arranged on, in particular in, a radial inner cover band (22) of the rotor grid (20), at least one of the impulse bodies (200) of the rotor grid (20) is arranged on, in particular in, a airfoil, and/or at least one of the impulse bodies (200) of the rotor grid (20) is arranged on, in particular in, a radial outer cover band (23) of the rotor grid (20).

10. The turbo engine stage according to any one of the preceding claims, **characterized in that** at least one of the impulse bodies (100) of the guide grid (10) has a mass, which is at least 1.1 times the mass of the heaviest or at most 0.9 times the mass of the lightest of the impulse bodies (200) of the rotor grid (20) and/or is at least 0.01 g and/or at most 0.05 g.

11. The turbo engine stage according to any one of the preceding claims, **characterized in that** at least one of the impulse bodies (100) of the guide grid (10) has a diameter, in particular a minimum or maximum diameter, which is at least 1.1 times the maximum diameter of the largest or at most 0.9 times the minimum diameter of the smallest of the impulse bodies (200) of the rotor grid (20) and/or at least 1 mm and/or at most 5 mm.

12. The turbo engine stage according to any one of the preceding claims, **characterized in that** the movement play of at least one of the impulse bodies (100) of the guide grid (10) and/or the movement play of at least one of the impulse bodies (200) of the rotor grid (20) is at least 0.01 mm and/or at least 1% of the minimum diameter of the impulse body (100, 200) and/or more at most 10 mm and/or at most 100% of the maximum diameter of the impulse body (100, 200).

**13.** A turbo engine, in particular a gas turbine, in particular a gas turbine of an aircraft engine, with at least one turbo engine stage according to any one of the preceding claims.

**14.** A method for designing and/or manufacturing a turbo engine stage according to any one of the preceding claims, wherein the guide grid (10) with the $n_v$ impulse bodies (100) and the rotor grid (20) with the $n_b$ impulse bodies (200) are fitted in such a way that

the quotient $\dfrac{\sum_{i=1}^{n_v} m_i}{s_v - c}$ of the sum $\sum_{i=1}^{n_v} m_i$ of the masses of all the impulse bodies (100) of the guide grid (10) divided

by the difference ($s_v$ - c) of the number $s_v$ of all guide vanes (11) and the number c of all guide vane carriers (12,13) is at least 1.5 times the quotient $\dfrac{\sum_{j=1}^{n_b} m_j}{s_b}$ of the sum $\sum_{j=1}^{n_b} m_j$ of the masses of all the impulse bodies (200) of the rotor grid (20) divided by the number Sb of all rotor blades (21) $\left[\dfrac{\sum_{i=1}^{n_v} m_i}{s_v - c} \geq 1{,}5 \cdot \dfrac{\sum_{j=1}^{n_b} m_j}{s_b}\right]$

**Revendications**

**1.** Etage de turbomachine doté :

d'une grille de guidage (10), dont les $s_v$ aubes de guidage (11) sont disposées sur c supports d'aubes de guidage (12, 13), où au moins deux des aubes de guidage (11) sont disposées sur au moins l'un des supports d'aubes de guidage (12, 13) ; et doté d'une grille de rotor (20) voisine de $s_b$ aubes de rotor (21) ;
où la grille de guidage présente $n_v$ corps d'impulsion (100) qui sont disposés dans un agencement de cavités (112) de la grille de guidage avec un jeu de mouvement pour le contact d'impact, **caractérisé en ce que**
la grille de rotor présente $n_b$ corps d'impulsion (200) qui sont disposés dans un arrangement de cavités (212) de la grille de rotor avec un jeu de mouvement pour le contact d'impact ; et que

le quotient $\frac{\sum_{i=1}^{n_v} m_i}{s_v - c}$ de la somme $\sum_{i=1}^{n_v} m_i$ des masses de tous les corps d'impulsions des grilles de guidage divisée par la différence ($s_v$ - c) du nombre $s_v$ de toutes les aubes de rotor diminué du nombre c de tous les supports d'aubes de rotor est égal à au moins 1,5 fois le quotient $\frac{\sum_{j=1}^{n_b} m_j}{s_b}$ de la somme $\sum_{j=1}^{n_b} m_j$ des masses de tous les corps d'impulsion de la grille de rotor divisée par le nombre $s_b$ de toutes les aubes de rotor égal à $\left[\frac{\sum_{i=1}^{n_v} m_i}{s_v - c} \geq 1{,}5 \cdot \frac{\sum_{j=1}^{n_b} m_j}{s_b}\right]$.

**2.** Etage de turbomachine selon la revendication précédente, **caractérisé en ce que** la grille de rotor (20) est disposée en amont ou en aval de la grille de guidage (10).

**3.** Etage de turbomachine selon l'une des revendications précédentes, **caractérisé en ce que** l'étage de turbomachine est un étage de compresseur ou un étage de turbine, notamment d'une turbine à gaz.

**4.** Etage de turbomachine selon l'une des revendications précédentes, **caractérisé en ce qu'au** niveau d'au moins un des supports d'aube de guidage (12, 13) au moins deux des aubes de guidage (11) est fixé de manière à être amovible sans dommages ou amovible en provoquant des dommages sur le support d'aube de rotor ou est conçu de manière intégrale avec le support d'aube de guidage.

5. Etage de turbomachine selon l'une des revendications précédentes, **caractérisé en ce qu'au** moins un des corps d'impulsion (100) de la grille de guidage (10), et/ou au moins un des corps d'impulsion (200) de la grille de rotor (20), est conçu de forme sphérique.

6. Etage de turbomachine selon l'une des revendications précédentes, **caractérisé en ce que** dans au moins une cavité (112) de l'agencement de cavités de la grille de guidage (10) sont disposés exactement un ou au moins deux des corps d'impulsions (100) de la grille de guidage, et/ou dans au moins une cavité (221) de l'agencement de cavités de la grille de rotor (20) sont disposés exactement un ou au moins deux des corps d'impulsion (200) de la grille de rotor.

7. Etage de turbomachine selon l'une des revendications précédentes, **caractérisé en ce qu'**au moins un des corps d'impulsion (100) de la grille de guidage (10), et/ou qu'au moins un des corps d'impulsion (200) de la grille de rotor (20), est disposé non fixé dans une cavité (112, 212) de l'agencement de cavités.

8. Etage de turbomachine selon l'une des revendications précédentes, **caractérisé en ce qu'**au moins une cavité (112) de l'agencement de cavités de la grille de guidage (10), notamment étanche à l'air, et/ou au moins une cavité (212) de l'agencement de cavités de la grille de rotor (20), notamment étanche à l'air, est disposée dans un carter (110, 210) fabriqué séparément.

9. Etage de turbomachine selon l'une des revendications précédentes, **caractérisé en ce qu'**au moins un des corps d'impulsion (100) de la grille de guidage (10) est disposé sur, notamment dans, une virole (13) intérieure radiale , au moins un des corps d'impulsion de la grille de guidage est disposé sur, notamment dans, une lame d'aube et/ou au moins un des corps d'impulsion de la grille de guidage est disposé sur, notamment dans une virole (12) extérieure radiale de la grille de guidage (10), et/ou au moins un des corps d'impulsion (200) de la grille de rotor (20) est disposé sur, notamment dans, une virole (22) intérieure radiale de la grille de rotor (20), au moins un des corps d'impulsion (200) de la grille de rotor (20) est disposé sur, notamment dans, une lame d'aube et/ou au moins un des corps d'impulsion (200) de la grille de rotor (20) est disposé sur, notamment dans une virole (23) extérieure radiale de la grille de rotor (20).

10. Etage de turbomachine selon l'une des revendications précédentes, **caractérisé en ce qu'**au moins un des corps d'impulsion (100) de la grille de guidage (10) présente une masse qui est au moins égale à 1,1 fois la masse du corps d'impulsion (200) de la grille de rotor (20) le plus lourd, ou au plus à 0,9 fois la masse du corps d'impulsion (200) le plus léger, et/ou égale à au moins 0,01 g et/ou au plus 0,05 g.

11. Etage de turbomachine selon l'une des revendications précédentes, **caractérisé en ce qu'**au moins un des corps d'impulsion (100) de la grille de guidage (10) présente un diamètre, notamment minimal ou maximal qui est égal à au moins 1,1 fois un diamètre maximal du plus grand corps d'impulsion (200) de la grille de rotor (20), ou au plus à 0,9 fois un diamètre minimal du plus petit des corps d'impulsion (200) de la grille de rotor (20), et/ou égal à au moins 1 mm et/ou égal au plus à 5 mm.

12. Etage de turbomachine selon l'une des revendications précédentes, **caractérisé en ce que** le jeu de mouvement d'au moins un des corps d'impulsion (100) de la grille de guidage (10), et/ou le jeu de mouvement d'au moins un des corps d'impulsion (200) de la grille de rotor (20), est égal à au moins 0,01 mm, et/ou à au moins 1 % d'un diamètre minimal du corps d'impulsion (100, 200), et/ou est égal au plus à 10 mm, et/ou est égal au plus à 100 % d'un diamètre maximal du corps d'impulsion (100, 200).

13. Turbomachine, notamment turbine à gaz, en particulier, turbine à gaz de groupe motopropulseur d'avion, dotée d'au moins un étage de turbomachine selon l'une des revendications précédentes.

14. Procédé pour l'élaboration et/ou la fabrication d'un étage de turbomachine selon l'une des revendications précédentes, dans lequel la grille de guidage (10) dotée des $n_v$ corps d'impulsions (100) et la grille de rotor (20) dotée des $n_b$ corps d'impulsion (200) sont détaillées de telle manière que le quotient $\frac{\sum_{i=1}^{n_v} m_i}{s_v - C}$ de la somme $\sum_{i=1}^{n_v} m_i$ des masses de tous les corps d'impulsions (100) de la grille de guidage (10) divisée par la différence $(s_v - c)$ du nombre $s_v$ de toutes les aubes de guidage (11) diminué du nombre c de tous les supports d'aubes de guidage (12, 13) est égal à au moins 1,5 fois le quotient $\dfrac{\sum_{j=1}^{n_b} m_j}{s_b}$ de la somme $\displaystyle\sum_{j=1}^{n_b} m_j$ des masses de tous les corps d'impulsion (200) de la grille de rotor (20) divisée par le nombre $s_b$ de toutes les aubes de rotor (21), égal à

$$\left[ \frac{\sum_{i=1}^{n_v} m_i}{s_v - C} \geq 1{,}5 \cdot \frac{\sum_{j=1}^{n_b} m_j}{s_b} \right].$$

# Fig. 1

**EP 3 196 413 B1**

**IN DER BESCHREIBUNG AUFGEFÜHRTE DOKUMENTE**

**In der Beschreibung aufgeführte Patentdokumente**

- WO 2012095067 A1
- EP 2806105 A